# EUROPÄISCHE PATENTANMELDUNG

(11) **EP 2 071 658 A1**
(43) Veröffentlichungstag der Anmeldung: **17.06.2009**
(21) Anmeldenummer: 07024275.5
(22) Anmeldetag: 14.12.2007
(51) Int. Cl.: H01M 10/42, H01M 10/36

(54) **Elektrolyt für eine elektrochemische Batteriezelle**

(71) Anmelder: Fortu Intellectual Property AG, 6060 Sarnen (CH)
(72) Erfinder: Zinck, Laurent, 76470 Mothern (FR); Hambitzer, Günther, 76327 Pfinztal (DE); Heitbaum, Joachim, 53115 Bonn (DE); Ripp, Christiane, 76327 Pfinztal (DE)
(74) Vertreter: Pfeifer, Hans-Peter

(57) **Zusammenfassung**

Elektrolyt für eine elektrochemische Batteriezelle, welcher Schwefeldioxid und ein Leitsalz enthält. Der Elektrolyt ist ein unter Beteiligung eines Fluorsulfinats gebildetes Gel. Die Erfindung richtet sich auch auf eine Batteriezelle, die einen solchen Elektrolyt enthält.

## Beschreibung

Die Erfindung befasst sich mit elektrochemischen Batteriezellen, insbesondere nichtwässrigen Zellen, die wiederaufladbar sind. Solche Zellen und aus einer oder mehreren Zellen hergestellte Batterien werden für eine Vielzahl von Anwendungszwecken benötigt Entwicklungsziele neuer Batteriezellen sind insbesondere hohe Energiedichte, hohe Strombelastbarkeit (geringer Innenwiderstand), hohe Lebensdauer über viele Lade- und Entladezyklen, geringe Kosten und ein hohes Maß an Betriebssicherheit

Ein wichtiges Funktionselement ist der Elektrolyt, mit dem die positive und die negative Elektrode von Batteriezellen in Kontakt steht. Er enthält ein Leitsalz. Mindestens ein ion des Leitsalzes (Anion oder Kation) ist in dem Elektrolyt in dem Sinne beweglich, dass durch Ionenleitung ein für die Funktion der Zelle erforderlicher Ladungstransport zwischen den Elektroden stattfinden kann.

Insbesondere betrifft die Erfindung Elektrolyten, die auf SO₂ basieren. Als "auf SO₂ basierender Elektrolyt" (SO₂ based electrolyte) wird ein Elektrolyt bezeichnet, der SO₂ nicht nur als Zusatz in geringer Konzentration enthält, sondern bei dem die Beweglichkeit der Ionen des Leitsalzes, das in dem Elektrolyt enthalten ist und den Ladungstransport bewirkt, zumindest teilweise durch das SO₂ gewährleistet ist.

Vorzugsweise wird der Elektrolyt in einer Alkalimetallzelle verwendet, bei der das aktive Metall (dessen Oxidationszustand sich beim Laden und Entladen der Zelle in Folge der an der negativen Elektrode ablaufenden Elektrodenreaktion ändert) ein Alkalimetall ist, wobei Lithium besonders bevorzugt ist. Das aktive Metall kann aber auch ein Erdalkalimetall oder ein Metall der zweiten Nebengruppe des Periodensystems sein. Nachfolgend wird beispielhaft (aber ohne Beschränkung der Allgemeinheit) überwiegend auf Lithium als aktives Metall der negativen Elektrode Bezug genommen.

Im Falle einer Alkalimetallzelle wird als Leitsalz vorzugsweise ein Tetrahalogenoaluminat des Alkalimetalls, beispielsweise LiAlCl₄ verwendet. Eine Alkalimetallzelle mit einem auf SO₂ basierenden Elektrolyten wird nachfolgend als Alkalimetall-SO₂-Zelle bezeichnet. Weitere bevorzugte Leitsalze sind Aluminate, Halogenide, Oxalate, Borate, Phosphate, Arsenate und Gallate eines Alkalimetalls, insbesondere von Lithium.

In der Regel wird für Batteriezellen eine flüssige Elektrolytlösung verwendet. Beispielsweise ist ein auf Schwefeldioxid basierender Elektrolyt mit einem Schwefeldioxidgehalt von mindestens etwa 0,5 mol SO₂ je mol Leitsalz bei Raumtemperatur flüssige. Flüssige Elektrolyten haben vor allem den Vorteil einer hohen lonenleitfähigkeit, weil die Ionen in der Flüssigkeit leicht beweglich sind. Die Zellen haben einen geringen Innenwiderstand und können mit hohen Lade- und Entladeströmen betrieben werden.

Diesen Vorteilen stehen jedoch auch Nachteile gegenüber, die insbesondere die Sicherheit der Batteriezellen betreffen. Wenn das Gehäuse durch eine im Betrieb auftretende Beschädigung oder durch unsachgemäße Behandlung undicht wird, tritt ein flüssiger Elektrolyt sofort aus, wobei flüchtige Bestandteile, wie beispielsweise Schwefeldioxid, verdampfen. Das Austreten von Elektrolyt kann erhebliche Belästigungen oder sogar Risiken verursachen. So wird austretendes SO₂ als unangenehm riechende Substanz wahrgenommen. Beim Kontakt mit Wasser reagiert die flüssige Elektrolytlösung, jedenfalls im Falle einer Alkalimetallzelle, heftig. Dabei können nicht nur weiße Nebelwolken entstehen, sondern es kann zu einem Verspritzen der abreagierenden Elektrolytbestandteile und damit zu ätzenden Hautreizungen kommen.

Ein weiterer Nachteil von flüssigen Elektrolytlösungen sind die aufwändigen Maßnahmen, die getroffen werden müssen, um Kurzschlüsse zwischen den inneren Anschlüssen der Zelle, die die elektrische Verbindung zwischen den äußeren Zellkontakten und den in der Zelle enthaltenen Elektroden herstellen, zu verhindern. Die Zellen müssen in der Regel lageunabhängig, also unabhängig von ihrer Orientierung im Raum, funktionieren. Wenn sich Elektrolyt zwischen den inneren Anschlüssen der Zelle befindet, kann sich beim Laden ein Metall, z.B. Lithium, verstärkt in diesem Bereich abscheiden, weil dort der elektrische Widerstand niedriger als in der übrigen Zelle ist. Dadurch wächst das Metall an einer der Leitungen an und verursacht schließlich einen Kulzschluss, wenn es die andere Leitung berührt. Um dies zu verhindern, müssen aufwändige Isolationsmaßnahmen ergriffen werden.

Aus diesen und anderen Gründen wurden zahlreiche Versuche unternommen, die Risiken und Nachteile eines flüssigen Elektrolyten zu vermeiden. Auf dem Gebiet der organischen Elektrolyten, wie sie bei den Lithium-lonen-Batteriezellen verwendet werden, wurden vor allem zahlreiche Varianten von Polymerelektrolyten vorgeschlagen, die zwar eine Erhöhung der Sicherheit bringen, jedoch erhebliche Nachteile in anderer Hinsicht, insbesondere bezüglich des elektrischen Widerstandes und damit der elektrischen Leistung der Zelle mit sich bringen. Die relativ besten Eigenschaften in dieser Hinsicht lassen sich mit sogenannten Gel-Polymer-Elektrolyten erreichen. Ein Überblick über diese Entwicklung wird in der Publikation A. M. Stephan, "Review on gel polymer electrolytes for lithium batteries", European Polymer Journal 42 (2006), 21-42, gegeben.

Die vorliegende Erfindung richtet sich insbesondere auf anorganische Elektrolyten, die vorzugsweise keine Kohlenstoffatome enthalten. Auf diesem Gebiet wird beispielsweise in der EP 1 149 429 vorgeschlagen, im Bereich der negativen Elektrode der Zelle ein Salz im festen Zustand in einer porösen Struktur derart anzuordnen, dass es in Kontakt zu der aktiven Masse steht, die an der negativen Elektrode abgelagert wird. Der angestrebte sicherheitserhöhende Effekt wird sowohl auf chemische Wirkungen des Salzzusatzes zurückgeführt, als auch auf physikalische Wirkungen, die unter anderem mit der reduzierten Beweglichkeit im Bereich des festen Salzes zusammenhängen. Gemäß der WO 02/071507 wird vorgeschlagen, im Falle eines auf Schwefeldioxid basierenden Elektrolyten einen viskositätserhöhenden Zusatz von anorganischen Feststoffpartikeln einzusetzen. In der WO2003/061036 wird der Vorschlag gemacht, in der Zelle eine poröse Struktur aus Partikeln zu verwenden, vorzugsweise aus mindestens zwei Fraktionen strukturbildender Feststoffpartikel mit unterschiedlicher mittlerer Teilchengröße. Obwohl diese Vorschläge geeignet sind, die Sicherheit von elektrochemischen Batteriezellen zu erhöhen und gute Funktionseigenschaften zu gewährleisten, besteht weiterhin Bedarf an einer technischen Lösung, die die Vorteile eines flüssigen Elektrolyten, vor allem hinsichtlich eines geringen Innenwiderstands der Zelle möglichst weitgehend bewahrt, aber Sicherheitsrisiken möglichst weitgehend vermeidet.

Auf dieser Grundlage liegt der Erfindung das technische Problem zugrunde, einen Elektrolyt für eine elektrochemische Batteriezelle und eine diesen Elektrolyt enthaltende Batteriezelle vorzuschlagen, die eine möglichst optimale Kombination der bis zu einem gewissen Grad widersprüchlichen Eigenschaften hoher zulässiger Stromdichten und hoher Betriebssicherheit gewährleistet.

Die Aufgabe wird durch ein Elektrolyt gemäß Anspruch 1 gelöst. Bevorzugte Ausgestaltungen sind Gegenstand der Unteransprüche. Die Erfindung richtet sich auch auf eine Batteriezelle, die einen solchen Elektrolyten enthält. In den Ansprüchen ist das Wort "ein" als unbestimmter Artikel, nicht als Zahlwort, zu verstehen. Von den entsprechenden Elementen der Ansprüche können demzufolge auch jeweils mehrere bei einer Realisierung der Erfindung vorhanden sein.

Der erfindungsgemäße Elektrolyt enthält Schwefeldioxid und ist ein unter Beteiligung eines Fluorsulfinat gebildetes Gel. Als Fluorsulfinat in diesem Sinne wird ein Salz aus einem [SO₂F]⁻ Anion und einem beliebigen Kation verstanden.

Als Gel wird üblicherweise ein aus mindestens zwei Komponenten bestehendes disperses System bezeichnet, bei dem eine der Komponenten ein fester, kolloid zerteilter Stoff ist, der oft als Verdickungsmittel oder auch als Geliermittel bezeichnet wird. Nachfolgend wird die Bezeichnung "Gelbildner" verwendet. Der Gelbildner bildet in dem Gel ein räumliches Netzwerk, wobei seine Teilchen an einzelnen Stellen (beispielsweise durch Van-der-Waaissche Kräfte, Ionenbrücken, SO₂-Brücken) miteinander verknüpft sind. In den Netzwerkzwischenräumen befindet sich die zweite Komponente.

Im Rahmen der Erfindung wurde festgestellt, dass ein Gelelektrolyt mit besonders vorteilhaften Eigenschaften erzeugt werden kann, wenn an der gelbildenden Reaktion ein Salz mit einem Fluorsulfinat-Anion beteiligt ist. Diese Erkenntnis basiert auf der experimentellen Beobachtung, dass das Elektrolytsystem LiAlCl₄ · SO₂ (auf SO₂ basierender Elektrolyt mit Lithiumtetrachloroaluminat als Leitsalz) geliert, wenn man ihm ein geeignetes Fluorid zusetzt. Durch weitere Experimente wurde aufgeklärt, dass das Fluorid mit dem SO₂ des Elektrolyten zu einem Salz reagiert, dessen Anion [SO₂F]⁻ ist. Bezeichnet man das Kation des Fluorids mit Me, so kann man die Reaktion zur Bildung des Fluorsulfinats schreiben:

MeFₓ + SO₂ → Me(SO₂F)ₓ I

Für die weitere Gelbildung wird nach dem gegenwärtigen, noch nicht vollständig gesicherten, Kenntnisstand der Erfinder folgender Mechanismus vorgeschlagen, der nachfolgend beispielhaft für den Fall eines einwertigen Metallkations Me⁺ erläutert wird:
Reaktion des Fluorsulfinats mit dem Leitsalz Tetrachtoroatuminat unter Bildung eines Me-Komplexes und von festem Lithiumchlorid:

   LiAlCl₄ + MeSO₂F → LiCl + Me⁺ + [SO₂FAlCl₃]⁻ II
Bindung der Komplexionen durch das Schwefeldioxid der Elektrolytlösung und Bildung einer netzartigen Struktur

   Me⁺ + [SO₂FAlCl₃]⁻ + LiAlCl₄·x SO₂ → netzartige Struktur III

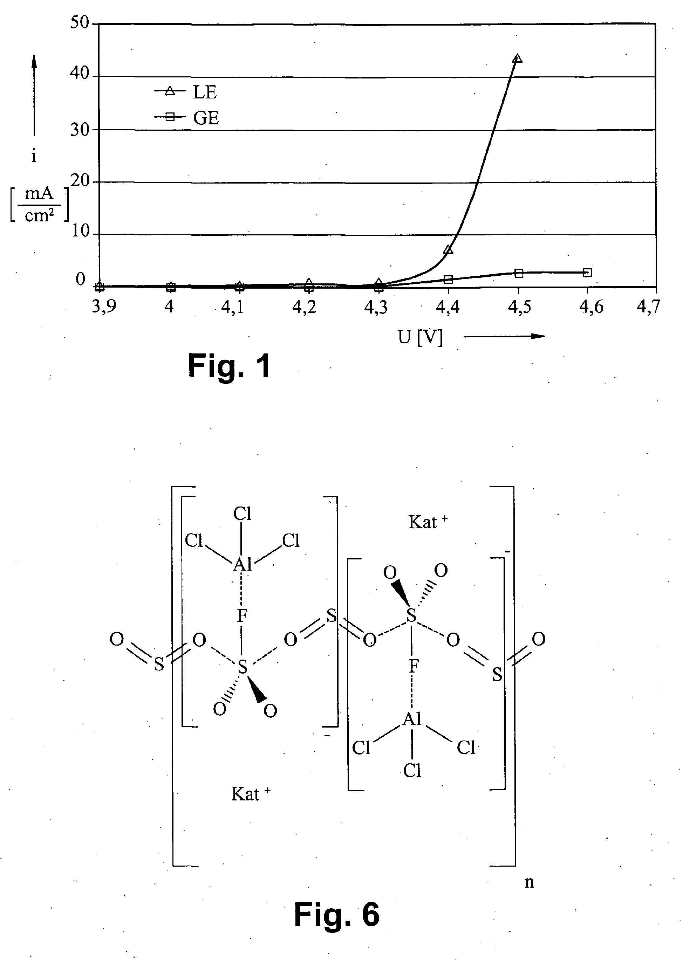

Eine nach dem gegenwärtigen Kenntnisstand der Erfinder wahrscheinliche netzartige Struktur des gelförmigen Elektrolyten ist in Figur 6 graphisch dargestellt.

Für die Gelbildung geeignet ist im Grundsatz insbesondere ein Fluorid, dessen Kation mit dem Kation des Leitsalzes (welches zugleich das aktive Metall der Zelle ist) übereinstimmt, im Falle einer Lithiumzelle also Li⁺. In der Tat wurde bei Zugabe von LiF zu dem Lithiumtetrachloroaluminat-Schwefeldioxid-Elektrolyt in der Praxis eine Gelbildung beobachtet Diese langsame Reaktion kann durch geeignete Verfahren, z.B. Rühren oder Einsatz von Ultraschall, beschleunigt werden. Auch die Anwesenheit von geringen Mengen an Kaliumionen K⁺ kann die Gelbildung beschleunigen. Dieser Effekt beruht auf der besseren Löslichkeit von KF in der Elektrolytlösung im Vergleich zu LiF.

Hierfür wird folgender Reaktionsmechanismus vorgeschlagen:
Reaktion der Kaliumionen mit dem Lithiumfluorid (lonentausch):

   K⁺ + LiF → KF + Li⁺ la
Reaktion des Kaliumfluorids mit dem Schwefeldioxid der Elektrolytlösung zu Kaliumfluorsulfinat:

   KF + SO₂ → KSO₂F I
Komplexbildungsreaktion analog obiger Gleichung II:

   LiAlCl₄ + KSO₂F → LiCl + K⁺ [SO₂FAlCl₃]⁻ II
Ionentauschreaktion der Komplex-Kationen:

   K⁺ [SO₂FAlCl₃]⁻ + Li⁺ → Li⁺ [SO₂FAlCl₃]⁻ + K⁺ IIa

Das dabei gebildete Kaliumion steht wieder für die Reaktion Ia zur Verfügung. Der Kreisprozess erklärt die beschleunigende Wirkung sehr kleiner Mengen des Kalium-Zusatzes.

Strukturbildung analog obiger Gleichung III:

Li⁺ + [SO₂FAlCl₃]⁻ + LiAlCl₄·x SO₂ → netzartige Struktur III

Das entscheidende Agens der beschriebenen Gelbildungsprozesse ist das Fluorsulfinat-Anion. Es kann durch eine Reaktion mit einem geeigneten Fluorid gemäß den obigen Reaktionsgleichungen I gebildet werden, wobei diese Reaktion in Anpassung an das Verfahren zur Herstellung der Zelle (wie weiter unten noch näher erläutert) sowohl innerhalb einer Batteriezelle (in situ) als auch außerhalb stattfinden kann.

Zur Herstellung des Fluorsulfinat-Anions sind unterschiedliche Fluoride geeignet. Hierzu gehören Alkali- oder Erdalkalifluoride, wie z.B. CsF, RbF, SrF₂ oder BaF₂. Auch Metallfluoride, insbesondere Übergangsmetallfluoride mit kleinen Kationen, wie z.B. MnF₃, können eingesetzt werden. Die Eignung im Einzelfall kann durch experimentelle Erprobung festgestellt werden, wobei folgende Eigenschaften des für die Bildung des Fluorsuffinat-Anions verwendeten Salzes wichtig sind:
- Das Metallfluorid sollte mit SO₂ (in reiner Form oder aus dem Elektrolyt) reagieren.
- Das Kation des Fluorids darf die Zellfunktion, also insbesondere die in der Zelle ablaufenden elektrochemischen Reaktionen nicht stören.

Wie bereits erwähnt, sind die oben mit II und III bezeichneten Mechanismen der Bildung der netzartigen Gelstruktur noch nicht vollständig gesichert. Es ist jedoch anzunehmen, dass das SO₂ in dem Gel eine Komponente der Gelbildner-Struktur ist. Geht man beispielsweise von der in Figur 6 dargestellten Struktur aus, so ist darin ein Teil des ursprünglich vorhandenen SO₂ in dem Fluorsulfinat gebunden. Ein weiterer Teil ist zwar noch als SO₂-Molekül vorhanden, jedoch in der Struktur (im dargestellten Fall in Form von SO₂-Brücken zwischen Komplexen) unbeweglich fixiert. Dessen ungeachtet gewährleistet das SO₂ auch in dem Gel (zumindest teilweise) die Beweglichkeit der Ionen des Leitsalzes (im Sinne der obigen Definition eines auf SO₂ basierenden Elektrolyten), weil die Solvatationsenergle, die die Dissoziation des Leitsalzes in dem Elektrolyten ermöglicht, durch das SO₂ bereitgestellt wird. In diesem Sinne wirkt das SO₂ als Lösungsmittel für das Leitsalz, auch wenn es in dem Gel überwiegend in gebundener und/oder fixierter Form vorliegt.

Der erfindungsgemäße gelartige Elektrolyt zeichnet sich durch eine Vielzahl vorteilhafter Eigenschaften aus:
- Die elektrischen Eigenschaften sind ebenso gut wie bei einem auf Schwefeldioxid basierenden Elektrolyt, der nicht gelifiziert wurde. Beispielsweise hat eine Elektrolytlösung der Zusammensetzung LiAlCl₄ * 1,4 SO₂ bei Raumtemperatur eine elektrische Leitfähigkeit von 50 mS cm⁻¹, die sich durch die Bildung eines Gels nicht ändert.
- Der Dampfdruck einer Elektrolytlösung mit der erwähnten Zusammensetzung beträgt bei 20°C ca. 0,1 * 10⁵ Pa. Wird daraus ein Gel gebildet, liegt der Dampfdruck noch niedriger.
- Durch die Reaktion des SO₂ zu Fluorsulfinat wird die Konzentration des SO₂ in der Elektrolytlösung vermindert. Dadurch wird die Sicherheit der Zelle erhöht, ohne dass die (sicherheitstechnisch vorteilhafte) Reduzierung der Konzentration an ungebundenem SO₂ zu einer Verschlechterung der elektrischen Eigenschaften führt.
- Das Gel hat thixotrope Eigenschaften, d.h. es wird durch Rühren wieder flüssig. Dies ist für die Verarbeitung bei der Produktion von Batteriezellen vorteilhaft.
- Da das Schwefeldioxid in dem erfindungsgemäßen Elektrolyt weitgehend in gebundener und/oder fixierter Form vorliegt, nimmt es an dem Transport der Ionen des aktiven Metalls nur geringfügig teil. Dadurch bildet sich kein Schwefeldioxid-Konzentrationsgradient in der Zelle als Folge des darin transportierten Ionenstroms aus. Vielmehr bleibt das in gebundener und fixierter Form vorliegende SO₂ gleichmäßig in der Zelle verteilt.
- Es wurde beobachtet, dass Überladereaktionen in vermindertem Umfang auftreten. Dies lässt sich darauf zurückführen, dass das Gelbildner-Anion bzw, ein das Gelbildner-Anion enthaltender Komplex bei höheren Potentialen an der Oberfläche der positiven Elektrode adsorbiert wird. Die Überladereaktion ist eine heterogene elektrochemische Oxidation des Leitsalz-Anions, die an der positiven Elektrode nur reduziert stattfinden kann, wenn die dort vorhandenen Adsorptionsplätze durch das Gelbildner-Anion belegt sind. Das Gelbildner-Anion ist hinsichtlich der Überiadereaktion inert.
- Die Reduzierung der Überladereaktionen ermöglicht höhere Zellspannungen. Geeignete Elektrodenmaterialien zur Herstellung von Zellen mit beispielsweise 5 Volt Spannung sind vorhanden. Diese Möglichkeiten konnten bisher jedoch nicht genutzt werden, weil kein für derartig hohe Spannungen stabiler Elektrolyt zur Verfügung stand.

Die Eigenschaften des Gels lassen sich dadurch gezielt variieren, dass die Mengenverhältnisse der Komponenten SO₂, Leitsalz und Gelbildner-Anion variiert wird. Durch Erhöhung der Menge des Gelbildner-Anions wird die Verformungsfestigkeit des resultierenden Gels variiert. Bei einer hohen Konzentration resultiert ein Elektrolyt mit mechanischen Eigenschaften ähnlich einem Festkörper.

Zur Herstellung einer Batteriezelle mit dem erfindungsgemäßen gelartigen Elektrolyten ist es notwendig, den Elektrolyt in die Zelle zu füllen und dort den erforderlichen engen Kontakt zu dem Elektroden, die häufig mikroporöse Strukturen haben, herzustellen. Hierzu werden nachfolgend mehrere mögliche Verfahrensweisen erläutert.

### 1. In situ-Herstellung durch Einbringen eines Fluorids in die Zelle

Das Fluorid wird in einem geeignetem Lösungsmittel (z.B. Wasser oder Acetonitril) gelöst, die Lösung in die Zelle eingebracht und anschließend das Lösungsmittel abgedampft.

Die Zelle wird mit Schwefeldioxid-Cas befüllt zur Bildung des Fluorsulfinats (Reaktionsformel 1). Überschüssiges SO₂-Gas wird abgelassen.

Die Zelle wird mit Elektrolytlösung befüllt. Die Gelbildung tritt spontan ein. Um die gemäß Reaktionsformel II stattfindende Bildung von festem LiCl zu reduzieren, kann es vorteilhaft sein, eine mit Aluminiumchlorid (AlCl₃) angereicherte Elektrolytlösung zu verwenden.

### 2. Einbringen eines vorher hergestellten Fluorsulfinats

Das Fluorsulfinat wird in einem geeigneten Lösungsmittel gelöst. Dabei sollte ein organisches (protonenfreies) Lösungsmittel verwendet werden. Die Lösung wird in die Zelle eingebracht und das Lösungsmittel wird anschließend abgedampft.

Die Zelle wird, wie bei dem Verfahren nach Ziffer 1, mit normaler oder aluminiumchloridreicher Elektrolytlösung befüllt, und die spontane Gelbildung wird abgewartet.

### 3. Einbringen eines vorher hergestellten Fluorsulfinat-Komplexes

Ein Fluorsulfinat-Komplex wird in einem geeigneten Lösungsmittel gelöst, die Lösung in die Zelle eingebracht und das Lösungsmittel abgedampft.

Nach dem Füllen mit Elektrolytlösung analog den Verfahren gemäß Ziffer 2 und Ziffer 3 findet spontan die Gelbildung statt.

Je nach der Löslichkeit der beteiligten Salze können diese bei den Verfahren 1 bis 3 unmittelbar verwendet werden oder es findet ein Zwischenschritt statt, bei dem das Kation des Salzes getauscht wird, wie beispielhaft anhand der obigen Reaktionsgleichungen Ia und IIa erläutert.

### 4. Direktes Befüllen der Zellen

Da das Gel thixotrop ist, besteht auch die Möglichkeit, es durch Einwirkung mechanischer Kräfte, beispielsweise mittels Rühren, Schütteln oder unter Ultraschalleinwirkung, zu verflüssigen und im flüssigen Zustand direkt in die Zelle zu füllen.

Die in den vorstehenden Reaktionen beteiligten Ausgangskomponenten könnten wie folgt hergestellt werden:

### a) Fluorsulfinat

Das Fluorsulfinat wird durch Reaktion des entsprechenden Fluorids mit Schwefeldioxid gebildet. Dabei werden zum Beispiel die Reaktanden unter Schutzgas gemischt und anschließend wird gerührt. Nach einer Reaktionszeit, die je nach dem eingesetzten Fluorid und den Reaktionsbedingungen in der Regel einige Stunden bis Tage dauert, kann das nicht umgesetzte SO₂ durch Abdampfen entfernt und das resultierende Produkt verwendet werden.

Für die Herstellung des Fluorsulfinats sind viele Wege bekannt, bei denen SO₂ in verschiedenen Formen und Aggregatzuständen verwendet wird. Die vorstehende Verfahrensweise ist nur ein Beispiel, das bereits 1955 beschrieben wurde in:

F. Seel, L. Riehl "Über Fluorsulfinate", Z. Anorg. Allgem. Chem. 282, 293 (1955)

### b) Fluorsulfinat-Komplex

Das Fluorsulfinat wird mit
(i) einem auf SO₂ basierenden Elektrolyt, vorzugsweise mit einem AlCl₃-Zusatz oder
(ii) flüssigem SO₂, vorzugsweise mit einem AlCl₃-Zusatz gemischt. Die Reaktion findet spontan statt. Das überschüssige SO₂ wird abgedampft und das resultierende Produkt kann verwendet werden. Im Falle (i) wird das Leitsalz mit flüssigem SO₂ ausgewaschen, wobei nach dem Entfernen des überschüssigen SO₂ das Produkt zurückbleibt. Im Falle (ii) wird das überschüssige SO₂ abgedampft und man erhält das verwendungsfertige Produkt.

Nachfolgend werden die positiven Eigenschaften des erfindungsgemäßen Gelelektrolyten und der damit hergestellten Batteriezellen anhand experimenteller Ergebnisse erläutert, die in den Figuren 1 bis 5 dargestellt sind.

Um die Eigenschaften des Gelelektrolyten hinsichtlich Überladereaktionen zu untersuchen, wurde die flächenspezifische Stromstärke (Strombedeckung) einer Lithiumkobaltoxid-Elektrode bei verschiedenen Potentialen vermessen. Figur 1 zeigt die Strombedeckung i in mA/cm² in Abhängigkeit von dem Elektrodenpotential in Volt bei Verwendung eines flüssigen Elektrolyten LE (dreieckige Messpunkte) und bei Verwendung eines Gelelektrolyten GE (quadratische Messpunkte).

Die Figur zeigt deutlich, dass bei Verwendung des flüssigen Elektrolyten ab ca. 4,2 Volt die Strombedeckung rasch ansteigt, weil der Strom durch Überladereaktionen verbraucht und in Wärme umgewandelt wird. Bei Verwendung des erfindungsgemäßen Gelelektrolyten wird hingegen die . Überladereaktion größtenteils verhindert, der Strom bleibt klein und die irreversibel verbrauchte Energiemenge ist gering.

Die hier diskutierte Eigenschaft der erfindungsgemäßen Zellen kann durch Variation der verwendeten Menge des Gelbildner-Anions an die Erfordernisse im Einzelfall angepasst werden. Wenn für den vorliegenden Anwendungsfall eine Überladereaktion vorteilhaft ist, wird eine relativ geringe Menge des Fluorsulfinats bei der Herstellung des Elektrolyten verwendet. Hohe Fluorsulfinatkonzentrationen sind dagegen vorteilhaft, wenn eine möglichst hohe Zellspannung angestrebt wird und - beispielsweise wegen eines gut kontrollierten Ladevorgangs - eine Überiadereaktion nicht erforderlich ist.

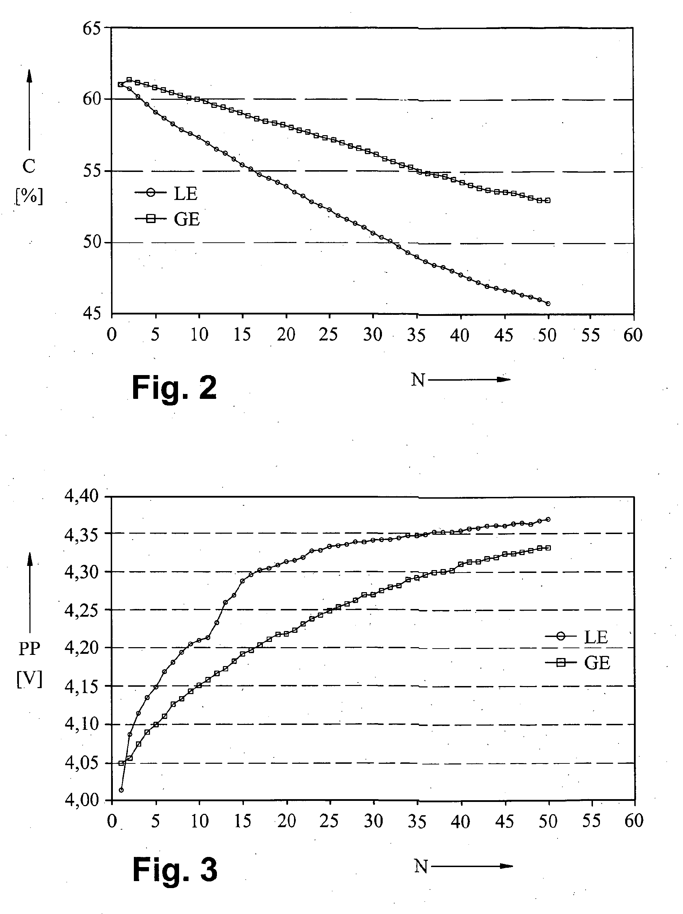

Figur 2 zeigt die Ergebnisse von Experimenten, bei denen die Entladekapazität von Lithiumkobaltoxid-Elektroden in Abhängigkeit von der Zahl der Lade- und Entladezyklen untersucht wurde. Zu diesem Zweck wurden zyklische Voltamogramme an einem Drei-Elektroden-System (Arbeitselektrode: Lithiumkobaltoxid; Gegenelektrode: Lithium; Bezugselektrode: Lithium) gemessen. Die Elektroden wurden in einer gläsernen E-Zelle angeordnet und mit der jeweils zu untersuchenden Elektrolytlösung gefüllt. Der Potentialbereich der zyklischen Voltamogramme lag zwischen 3,5 Volt und 4,5 Volt und wurde mit einer Geschwindigkeit von 0,2 mV/s variiert.

Figur 2 zeigt die auf diese Weise ermittelten Entladekapazitäten C in Prozent der theoretischen Kapazität in Abhängigkeit von der Zahl N der durchgeführten Lade- und Entladezyklen der Lithiumkobaltoxid-Elektrode, wiederum als Vergleich für eine flüssige Elektrolytlösung LE (Kreise) und einen Gelelektrolyt GE (Quadrate), der durch Zugabe von Lithiumfluorid hergestellt wurde. Man sieht, dass die Entladekapazität der Zelle mit dem Gelelektrolyt wesentlich höher und über die Zykelzahl konstanter ist als mit dem flüssigen Elektrolyt. Dies lässt sich darauf zurückführen, dass bei der Verwendung des Gelelektrolyten weniger Energie für die Überladereaktion ohne tatsächlichen Ladeeffekt verbraucht wird.

Figur 3 zeigt ebenfalls Messergebnisse, die aus den zuvor erläuterten zyklischen Voltamogrammen abgeleitet wurden. Dargestellt ist in diesem Fall die Peaklage PP (peak Position) der Ladepeaks der positiven Elektrode in Volt für einen flüssigen Elektrolyt LE (Kreise) und einen Gelelektrolyt GE (Quadrate) in Abhängigkeit von der Zykelzahl N. Eine Verschiebung der Peaks zu höheren Potentialen ist ein Indiz für eine Widerstandserhöhung, die durch eine Deckschicht auf der positiven Elektrode verursacht wird. Die Ergebnisse zeigen, dass eine solche Verschiebung mit dem Gelelektrolyt in deutlich geringerem Umfang als mit dem flüssigen Elektrolyt stattfindet. Dies lässt sich darauf zurückführen, dass durch die Verwendung des Gels weniger Überladeprodukte gebildet werden, die zu einer Deckschicht reagieren könnten.

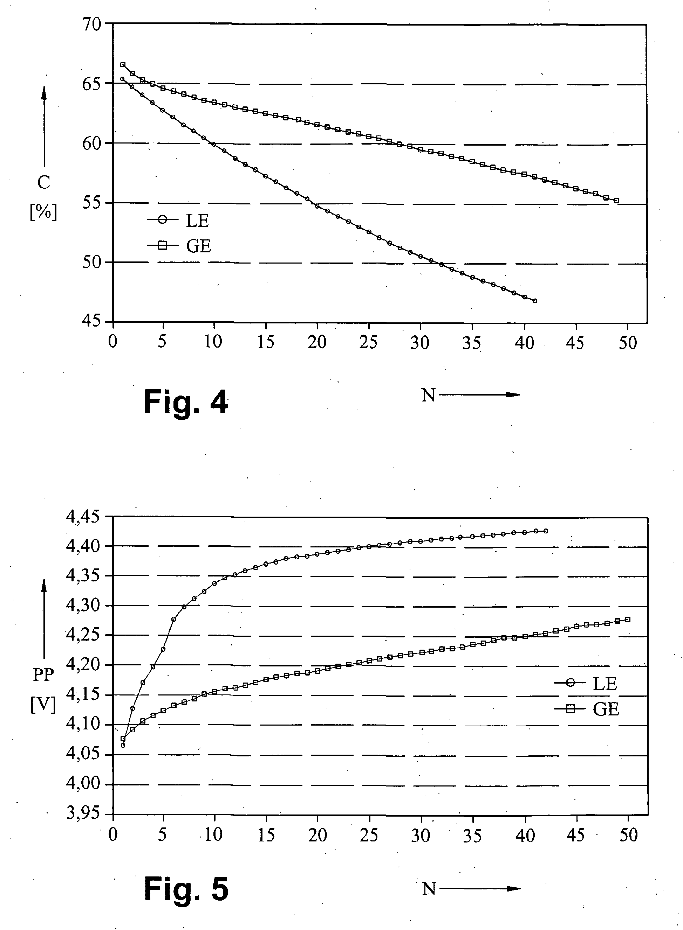

Die Figuren 4 und 5 zeigen experimentelle Ergebnisse entsprechend den Figuren 2 und 3, bei denen jedoch der Gelelektrolyt unter Verwendung von Manganfluorid (MnF₃) hergestellt wurde. Die dargestellten Ergebnisse bestätigen die zuvor aus den Figuren 2 und 3 abgeleiteten Erkenntnisse über die vorteilhaften Wirkungen der Verwendung eines Gelelektrolyts.

## Patentansprüche

1. Elektrolyt für eine elektrochemische Batteriezelle, enthaltend Schwefeldioxid und ein Leitsalz, **dadurch gekennzeichnet, dass** er ein Gel ist, das unter Beteiligung eines Fluorsulfinat gebildet ist.

2. Elektrolyt nach Anspruch 1, **dadurch gekennzeichnet, dass**
er ein Metallhalogenid MX enthält, wobei
M ein Metall der dritten Hauptgruppe des Periodensystems und X eines der Halogene Fluor, Chlor, Brom oder Jod ist.

3. Elektrolyt nach Anspruch 2, **dadurch gekennzeichnet, dass** die Gelbildungsreaktion eine Lewisbase-Lewissäure-Reaktion des Fluorsulfinats und des Metallhalogenids einschließt.

4. Elektrolyt nach einem der vorhergehenden Ansprüche, **dadurch gekennzeichnet, dass** das Gel ein Solvat des Leitsalzes mit SO₂ enthält.

5. Elektrolyt nach Anspruch 4, **dadurch gekennzeichnet, dass** die Menge des SO₂, bezogen auf die Menge des Leitsalzes, in dem Elektrolyt mindestens 0,1, bevorzugt mindestens 0,5 Mol SO₂ je Mol Leitsalz ist.

6. Elektrolyt nach einem der vorhergehenden Ansprüche, **dadurch gekennzeichnet, dass** das Leitsalz ausgewählt ist aus der Gruppe bestehend aus den Aluminaten, Halogeniden, Oxalaten, Boraten, Phosphaten, Arsenaten und Gallaten eines Alkalimetalls, insbesondere von Lithium.

7. Elektrochemische Batteriezelle enthaltend eine positive Elektrode, eine negative Elektrode und einen Elektrolyt nach einem der vorhergehenden Ansprüche.

8. Elektrochemische Batteriezelle, **dadurch gekennzeichnet, dass** die aktive Masse der positiven Elektrode eine Metallverbindung, vorzugsweise ein Metalloxid, enthält.

9. Elektrochemische Batteriezelle nach Anspruch 8, **dadurch gekennzeichnet, dass** die aktive Masse der positiven Elektrode ein Metalloxid eines Übergangsmetalls M, insbesondere eines Elementes der Ordnungszahlen 22 bis 28, enthält

10. Elektrochemische Batteriezelle nach einem der Ansprüche 7 bis 9, **dadurch gekennzeichnet, dass** die aktive Masse der positiven Elektrode eine Interkalationsverbindung enthält.

11. Elektrochemische Batteriezelle nach einem der Ansprüche 7 bis 10, bei der beim Laden der Zelle durch eine Elektrodenreaktion an der negativen Elektrode ein aktives Metall gebildet wird, **dadurch gekennzeichnet, dass** das aktive Metall ausgewählt ist aus der Gruppe bestehend aus den Alkalimetallen, den Erdalkalimetallen und den Metallen der zweiten Nebengruppe des Periodensystems, insbesondere das aktive Metall Lithium, Natrium, Calcium, Zink oder Aluminium ist.

12. Verfahren zum Herstellen einer Batteriezelle nach einem der Ansprüche 7 bis 11, **dadurch gekennzeichnet, dass** das Gel innerhalb der Zelle durch eine Reaktion gebildet wird, an der das Fluorsulfinat und ein Elektrolyt, der SO₂ und ein Leitsalz enthält, beteiligt ist.

13. Verfahren zum Herstellen einer Batteriezelle nach einem der Ansprüche 7 bis 11, **dadurch gekennzeichnet, dass** das Gel außerhalb der Zelle gebildet, unter Einwirkung mechanischer Kräfte in den flüssigen Zustand überführt und als Flüssigkeit in die Zelle gefüllt wird.
